# FASCICULE DE BREVET EUROPEEN

(11) **EP 1 643 139 B1**
(45) Date de publication et mention de la délivrance du brevet: **14.05.2008**
(21) Numéro de dépôt: 05077744.0
(22) Date de dépôt: 28.10.2003
(51) Int. Cl.: F15B 21/04, F16H 61/40, F16H 61/46, F16K 17/00, F16K 17/04, F16K 17/10

(54) **Dispositif de valve d'échange**
Spülventilvorrichtung
Exchange valve device

(30) Priorité: 28.10.2002 FR 0213438
(43) Date de publication de la demande: 05.04.2006
(62) Demande divisionnaire de: 03778478.2
(73) Titulaire: POCLAIN HYDRAULICS INDUSTRIE, 60411 Verberie (FR)
(72) Inventeur: Mangano, Alain, 60350 Vieux Moulin (FR); Raisin, Jean-Philippe, 60270 Gouvieux (FR)
(74) Mandataire: Intes, Didier Gérard André

(56) Documents cités:
- DE-A1- 2 932 481
- US-A- 3 174 410
- US-A- 4 126 993

## Description

La présente invention concerne un dispositif de valve selon le préambule de la revendication 1.

Un tel dispositif permet de réaliser l'échange et/ou le balayage pour un circuit comprenant au moins un moteur hydraulique ayant un carter qui définit un espace intérieur dans lequel est disposé le bloc-cylindres du moteur, et deux conduites principales, qui sont reliées à une pompe principale et qui constituent respectivement une conduite principale d'alimentation et une conduite principale d'échappement pour ledit moteur hydraulique, la valve d'échange étant reliée à l'une au moins des conduites principales et apte à adopter une configuration ouverte (deuxième position de l'organe mobile) dans laquelle elle établit une liaison entre ladite conduite principale à laquelle elle est reliée et un réservoir sans pression, et une configuration fermée (première position de l'organe mobile) dans laquelle elle empêche cette liaison.

Un tel dispositif d'échange a pour fonction de prélever du fluide sur le circuit principal, afin de permettre le refroidissement du fluide avant son évacuation vers un réservoir sans pression et sa réinjection dans le circuit. Avec un dispositif de balayage le fluide prélevé passe par le carter du moteur et/ou de la pompe principale avant d'être évacué vers le réservoir sans pression et remis en circulation, en général par une pompe auxiliaire.

Des dispositifs d'échange connus comportent un sélecteur qui permet de mettre en communication la conduite principale qui est à la plus basse pression avec une soupape qui n'autorise l'évacuation du fluide qu'à partir d'un seuil de pression. Dans certains dispositifs, le débit de fluide prélevé peut être limité.

Par exemple, le document DE-195 22 448 montre un dispositif d'échange comportant un sélecteur d'échange et une soupape disposés l'un à la suite de l'autre sur le circuit d'échange.

Le document US 6,339,928 divulgue un dispositif d'échange pour un circuit fermé comprenant un sélecteur du type précité et une valve d'échange qui est commandée pour autoriser ou non l'évacuation du fluide dans certaines conditions de fonctionnement. Pour cela, cette valve d'échange est commandée en fonction de paramètres de fonctionnement tels que la vitesse du véhicule entraîné par le moteur hydraulique, la vitesse de rotation d'un moteur à combustion qui entraîne la pompe principale et la température du fluide dans cette pompe.

La valve d'échange du dispositif de US 6,339,928 est entièrement commandée électriquement, par un processeur qui, à partir de paramètres représentatifs d'un état du circuit, détermine un ordre de commande.

Dans un grand nombre de cas, il reste intéressant de prendre en compte la pression dans la conduite principale à laquelle est reliée la valve d'échange, pour permettre ou non un échange. C'est par exemple le cas lorsque le débit de fluide délivré par la source de fluide à laquelle est relié l'échange devient faible, car le débit d'échange risque alors d'entraîner dans la conduite principale à laquelle est reliée la valve d'échange une chute de pression telle que le gavage du moteur peut ne pas être assuré.

Le dispositif de US 6,339,928 ne peut prendre cette pression en compte que si des capteurs de pressions sont disposés dans les deux conduites principales ou à la sortie d'un sélecteur raccordé à ces conduites, de telle sorte que les pressions mesurées par ces capteurs soient utilisées par le processeur lors de la détermination de sa commande.

Ainsi, un certain nombre de composants électroniques sont nécessaires, ce qui augmente le prix de revient du dispositif. De plus, la commande entièrement électrique ne s'avère pas toujours la mieux adaptée lorsque, comme c'est le cas en l'espèce, cette commande s'applique à des composants hydrauliques dont l'ouverture ou la fermeture modifie l'état hydraulique du circuit.

Enfin, le brevet US 3,174,410 présente un dispositif de valve comportant une valve d'échange et une valve de commande, sans donner toutefois d'informations sur l'intégration du dispositif de valve dans un moteur.

La présente invention vise à remédier aux inconvénients de l'état de la technique précité en proposant un dispositif de valve, permettant la prise en compte, pour l'échange, de la pression dans la conduite à laquelle est reliée la valve d'échange par une commande hydraulique, en plus d'un paramètre autre que cette pression.

Plus particulièrement, la présente invention vise à proposer un dispositif de valve apte à être inséré sur un carter de moteur, permettant ainsi d'adapter simplement le dispositif de valve en fonction du type de commande de dispositif de valve envisagé pour le moteur.

Ce but est atteint grâce aux caractéristiques de la partie caractérisante de la revendication 1.

Avec l'invention, c'est la valve de commande qui est commandée par le paramètre autre que la pression dans la conduite à laquelle est reliée la valve d'échange, tandis que, par la disposition judicieuse des chambres de commande d'ouverture et de fermeture de cette valve d'échange, cette dernière est commandée par la pression dans la conduite principale à laquelle elle est reliée.

L'échange peut ne pas être souhaité dans certaines conditions particulières, par exemple au démarrage du moteur hydraulique.

En effet, en prélevant un débit de fluide pour l'échange, on risque de priver le circuit d'une quantité de fluide nécessaire au pilotage d'autres fonctions auxiliaires, telles que le déblocage du frein de stationnement. Ainsi, le prélèvement d'un débit d'échange peut faire chuter la pression et empêcher le pilotage d'une autre fonction.

En outre, lorsque le dispositif comporte un sélecteur d'échange à tiroir, il peut arriver, lorsque le fluide est froid et présente une viscosité élevée, que ce tiroir ait un déplacement trop lent pour permettre la mise en communication de la conduite principale qui est à la plus basse pression avec la soupape d'échange. En effet, si la pression dans les conduites s'inverse, le tiroir peut rester momentanément dans la position qu'il avait avant cette inversion et donc mettre la conduite principale qui était précédemment à la basse pression et qui se trouve alors à la haute pression, en communication avec la valve d'échange, privant ainsi le moteur d'une partie de sa puissance.

Lorsque la valeur dudit au moins un paramètre de commande témoigne du fait que l'échange n'est pas souhaité, la valve de commande est commandée pour isoler du réservoir la chambre de commande de fermeture. Du fait de cet isolement, la pression dans la chambre de commande de fermeture peut être telle que la pression dans la chambre de commande d'ouverture, reliée à l'une des conduites principales, ne soit pas suffisante pour commander l'ouverture de la valve d'échange.

Ceci permet d'éviter de prélever du fluide dans la conduite principale par le dispositif d'échange dans des conditions défavorables, reflétées par ce paramètre de commande. Comme on le verra dans la suite, ces conditions défavorables peuvent être un démarrage à froid du moteur ou bien des phases de fonctionnement particulières, telles qu'une accélération, une décélération, une manoeuvre requérant toute la puissance du moteur, etc. Dans toute la suite, ce paramètre autre que la pression de fluide dans la conduite principale est dénommé premier paramètre de commande. Il convient de relever que, dans ces conditions défavorables dans lesquelles l'échange n'est pas souhaité, la pression dans la chambre de fermeture de la valve d'échange est telle qu'elle empêche les fuites entre l'entrée de la valve d'échange et le réservoir.

En revanche, lorsque ces conditions défavorables ne sont plus constatées, c'est-à-dire lorsque l'état du circuit permet théoriquement l'échange, la valve de commande relie la chambre de commande de fermeture au réservoir et la valve d'échange réalise l'échange lorsque la pression dans la conduite principale à laquelle elle est reliée le permet.

Avantageusement, le premier paramètre de commande représentant un état du circuit est choisi parmi la pression du fluide dans une conduite auxiliaire du circuit (par exemple la pression de gavage), la température du fluide dans une région du circuit, la vitesse du rotor du moteur, l'accélération ou la décélération dudit rotor, et la cylindrée active du moteur.

Il peut s'agir aussi de l'angle de braquage d'un véhicule entraîné par le moteur hydraulique, de l'utilisation du débit d'une pompe auxiliaire pour la commande d'une servitude, du sens de marche, d'une situation de freinage, etc...

Le premier paramètre de commande peut être de tout type, dès lors que sa valeur est représentative d'un état du circuit qui permet de conditionner l'actionnement du dispositif d'échange.

Avantageusement, le dispositif comporte un actionneur apte à commander la valve de commande en fonction d'un seuil du premier paramètre de commande.

Par exemple, lorsque le premier paramètre de commande atteint le seuil, l'actionneur autorise la valve de commande à relier la chambre de commande de fermeture au réservoir sans pression, permettant alors la réalisation de l'échange par la valve d'échange commandée hydrauliquement par la pression dans la conduite principale à laquelle elle est reliée. Avantageusement, le dispositif comporte un sélecteur d'échange apte à mettre la conduite principale qui est à la plus basse pression en communication avec la valve d'échange.

Ce sélecteur permet donc de manière connue, de relier la valve d'échange à la conduite qui est à la plus basse pression. L'invention s'applique toutefois également à un dispositif d'échange dépourvu d'un tel sélecteur, en particulier, du type décrit dans la demande de brevet français n° 2 819 023.

La valve d'échange peut être un sélecteur non progressif à deux positions, auquel cas le débit de fluide prélevé dans sa position ouverte est limité par une restriction. Toutefois, avantageusement, il s'agit d'une valve progressive telle qu'une soupape ou limiteur de pression qui permet de réguler la pression dans la conduite à laquelle elle est reliée quel que soit le débit.

Selon un mode de réalisation avantageux, la valve d'échange comprend un corps de valve ayant une entrée raccordée à l'une des conduites principales et une sortie apte à être reliée au réservoir sans pression et un organe mobile entre une première et une deuxième position correspondant respectivement à la configuration fermée et à la configuration ouverte de cette valve d'échange, ledit organe mobile isolant l'entrée de la sortie dans sa première position et reliant ces dernières dans sa deuxième position.

Avantageusement, la chambre de commande de fermeture est associée à des moyens de rappel élastique d'échange sollicitant en permanence l'organe mobile vers sa première position.

Avantageusement, la chambre de commande d'ouverture est située à une extrémité de l'organe mobile qui est voisine de l'entrée du corps de valve, tandis que la chambre de commande de fermeture est située à l'autre extrémité de cet organe mobile et communique avec la chambre de commande d'ouverture par un perçage de l'organe mobile.

Le corps de valve est avantageusement disposé dans un alésage du carter.

Ainsi, la valve d'échange est avantageusement intégrée dans une cartouche qui est directement fixée sur le carter du moteur, permettant à partir d'une structure de moteur standard de choisir le mode d'échange et de balayage le mieux adapté, en modifiant seulement cette

En outre, lorsque la valve de commande est disposée au moins en partie dans le corps de valve de la valve d'échange, le premier paramètre de commande peut être directement lié à un état du moteur, tel que sa température, la température du fluide qui le traverse, sa cylindrée, etc.

Ainsi, pour adapter le circuit au type de commande envisagé, il suffit de choisir un ensemble valve d'échange/valve de commande (intégré dans un même composant hydraulique, formant la cartouche précitée) et de l'insérer sur le carter du moteur retenu. La gamme des moteurs proposée est donc largement étoffée à partir d'un nombre restreint de types de moteurs et de dispositifs d'échange.

Avantageusement, la sortie de la valve d'échange est raccordée au réservoir sans pression par l'intermédiaire de l'espace intérieur du carter du moteur.

Dans cette configuration, le fluide prélevé pour l'échange est utilisé pour effectuer un balayage de l'espace intérieur du moteur. En effet, le fluide prélevé par la valve d'échange est injecté dans le carter, tandis que le fluide présent dans le carter est évacué par l'orifice de retour de fuites habituel.

Avantageusement, la valve de commande est une valve progressive.

Le débit de fluide prélevé pour effectuer l'échange peut ainsi varier en fonction de la situation du circuit, en particulier en fonction de la variation du premier paramètre de commande.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels :
- la figure 1 montre schématiquement un circuit d'entraînement d'un moteur hydraulique comprenant un dispositif d'échange, selon l'invention;
- la figure 2A est une vue en coupe longitudinale d'un ensemble valve d'échange/valve de commande selon un mode de réalisation avantageux de l'invention, dans une position ne permettant pas l'échange ;
- la figure 2B est une vue en coupe analogue à celle de la figure 2A, montrant l'ensemble valve d'échange/valve de commande dans une position d'échange ; et
- la figure 3 est une coupe analogue à celle de la figure 2A, pour une variante.

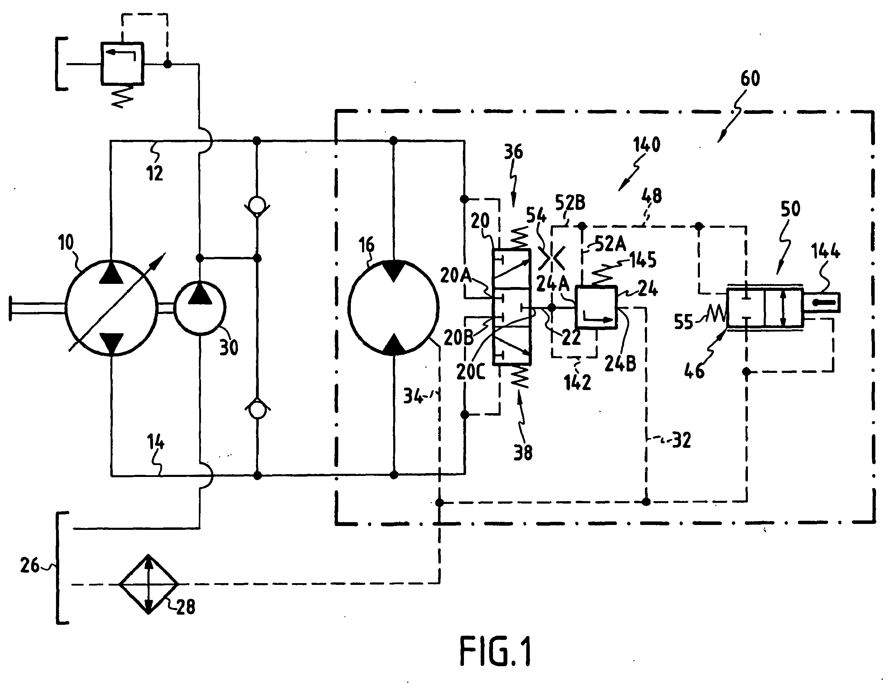

La figure 1 montre un circuit fermé dont la pompe principale 10 a ses orifices respectivement reliés à deux conduites principales, respectivement 12 et 14 qui servent respectivement de conduite d'alimentation et de conduite d'échappement pour un moteur hydraulique 16 auquel elles sont reliées.

Ce circuit comporte en outre un dispositif d'échange qui comprend un sélecteur d'échange 20 qui a deux voies d'entrée 20A et 20B respectivement reliées à chacune des deux conduites principales 12 et 14 et une voie de sortie 20C qui, par une conduite 22 évacue le fluide prélevé par le sélecteur 20 vers l'entrée 24A d'une valve d'échange 24 apte, lorsque son entrée est reliée à sa sortie 24B,à relier la sortie 20C du sélecteur 20 à un réservoir sans pression 26 par l'intermédiaire d'un refroidisseur 28. Ainsi, dans des conditions de fonctionnement données, le fluide prélevé par le sélecteur 20 est refroidi avant d'être réinjecté dans le circuit principal par une pompe de gavage 30. Le réservoir est dit "sans pression" car il est à la pression atmosphérique ou à une faible pression, au plus égale à la pression de gavage.

La sortie 24B de la valve d'échange 24 peut être directement reliée au réservoir sans pression 26 par une conduite de sortie 32 pour servir seulement à l'échange, ou bien être reliée à ce réservoir 26 par l'intermédiaire de l'espace intérieur du moteur 16, pour servir également au balayage dudit espace intérieur, comme illustré sur la figure 1, avant d'être évacué vers le réservoir par le conduit de retour de fuites du moteur 34. Dans ce dernier cas, on parle de dispositif de balayage. Hormis les différences précitées, les deux types de dispositifs fonctionnant de la même manière, on ne s'intéresse pour toute la suite qu'à la seule description d'un dispositif d'échange. Le moteur 16 n'est pas représenté en détails, mais il s'agit par exemple d'un moteur à pistons radiaux du même type que celui décrit dans FR-A-2 673 684.

Le sélecteur d'échange 20 est commandé par des moyens de commande 36 et 38 à partir de sa position neutre représentée sur la figure 1, dans laquelle aucune communication n'est établie entre les conduites principales 12 et 14 et la conduite 22, vers l'une ou l'autre de ses deux positions d'échange dans lesquelles il raccorde la conduite principale 12 ou 14 qui est à la plus basse pression à la conduite 22.

La valve d'échange 24 est commandée par l'intermédiaire d'une valve de commande 46 qui, comme illustré sur la figure 1, est disposée entre une conduite de liaison 48 et le retour de fuites 34 du moteur.

La valve d'échange 24 comporte, un organe mobile entre une première et une deuxième position, correspondant respectivement à la configuration fermée et ouverte de cette valve. La valve d'échange 24 est une soupape ou un limiteur de pression dont l'organe mobile est le clapet ou le tiroir. Ci-après, cet organe mobile sera dénommé tiroir.

Les moyens de commande 60 de cette valve d'échange 24 comportent la valve de commande 46 et des moyens 140 pour commander le déplacement du tiroir, lorsque celui-ci est rendu possible par l'état de la valve de commande 46.

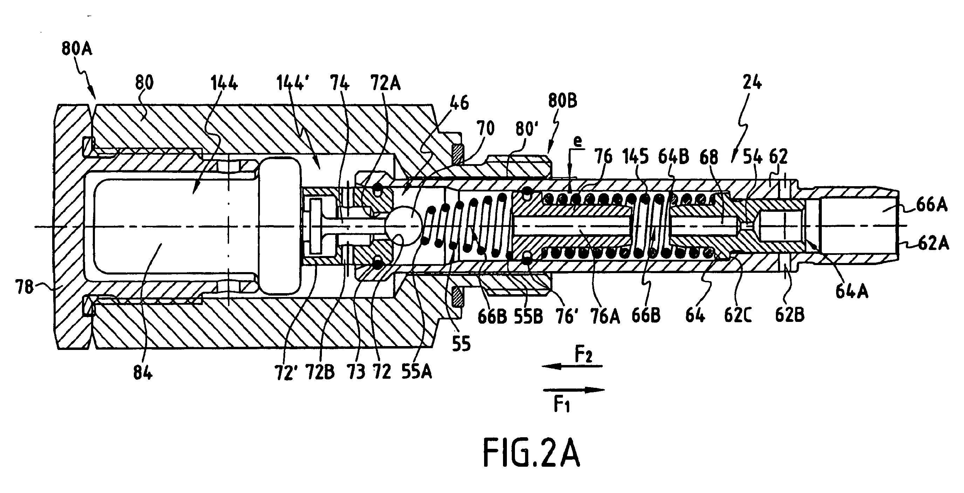

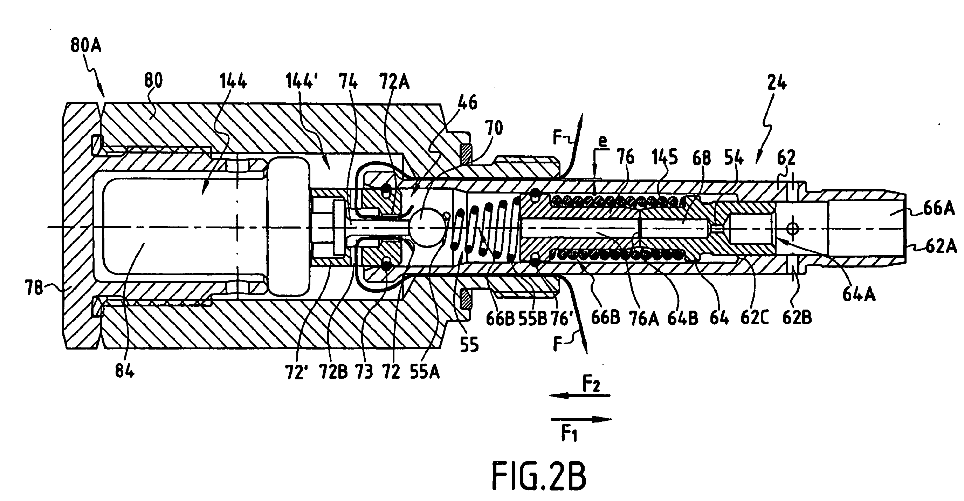

Les moyens de commande 140 du tiroir illustrés sur la figure 2 sont des moyens de commande hydraulique et comportent une conduite de liaison 142 qui est reliée à la conduite 22 et qui débouche sur un côté du tiroir dans une chambre de commande d'ouverture (non représentée sur la figure 1), de sorte que la pression de fluide dans la conduite de liaison 142 tend à pousser ce tiroir vers sa position d'ouverture. Les moyens de commande 140 comportent en outre des moyens de rappel vers la position de fermeture, qui comprennent en l'espèce un ressort 145 et une conduite de liaison 52A, reliée à la conduite 22 par l'intermédiaire d'une restriction 54 et débouchant sur un côté du tiroir dans une chambre de commande de fermeture (non représentée sur la figure 1), de sorte que la pression de fluide dans la conduite 52A et le ressort 145 tendent à pousser cet organe mobile vers sa position de fermeture, à l'encontre de l'effort exercé par la pression de fluide dans la conduite de liaison 142.

Ainsi, la pression de fluide dans la conduite principale 12 ou 14 qui est à la plus basse pression (à laquelle est reliée l'entrée de la valve d'échange 24) est prise en compte dans la commande cette valve.

La restriction 54 est disposée sur le tronçon 52B de liaison de la conduite de liaison 52A à la conduite 22, de manière à établir une perte de charge entre la conduite 22 et la chambre de commande de fermeture qui est alimentée par la conduite de liaison 52A.

Dans l'exemple représenté, les chambres de commande d'ouverture et de fermeture de la valve d'échange sont reliées à la même conduite principale, puisqu'elles sont toutes deux reliées à la conduite 22. On peut envisager que la chambre de commande d'ouverture reste reliée à la conduite principale à laquelle est reliée l'entrée de la valve d'échange, mais que la chambre de commande de fermeture soit reliée à une autre enceinte sous pression, par exemple à une source de pression auxiliaire telle que la pompe de gavage.

La valve de commande 46 est quant à elle commandée par des moyens de commande 50 entre une configuration ouverte dans laquelle elle autorise le fluide provenant de la conduite de liaison 52A et donc de la chambre de commande de fermeture de la valve d'échange 24 à s'écouler vers le réservoir sans pression 26 et une configuration fermée dans laquelle elle isole cette chambre de ce réservoir 26.

Ces moyens de commande 50 comportent une commande 144 de tout type convenable (hydraulique, électrique, pneumatique, thermique, mécanique, etc...) qui est actionnée en fonction d'un premier paramètre P représentant un état du circuit pour solliciter le passage de la valve de commande 46 entre sa position fermée et sa position ouverte.

Ce premier paramètre P représente un état du circuit et sa valeur indique si l'échange peut avoir lieu ou au contraire s'il est préférable d'éviter de prélever du fluide pour faire l'échange, ceci afin de préserver la quantité de fluide et sa pression dans le circuit et ainsi garantir son bon fonctionnement. Ce premier paramètre P est par exemple choisi pour représenter une situation de démarrage à froid du moteur ou bien des phases de fonctionnement particulières, telles qu'une accélération, une décélération, une manoeuvre requérant toute la puissance du moteur, etc. En conséquence, le premier paramètre de commande peut être choisi parmi la pression du fluide dans une conduite auxiliaire du circuit, la température du fluide dans une région du circuit, la vitesse du rotor du moteur, l'accélération ou la décélération dudit rotor et la cylindrée active du moteur, etc.

La valve de commande 46 peut par exemple être une électrovalve commandée par une unité de contrôle électronique qui donne un ordre d'ouverture ou de fermeture en fonction de la valeur du premier paramètre de commande P détectée, transmise à cette unité et comparée à une valeur de référence.

La valve 46 comporte avantageusement un organe mobile, tel qu'un tiroir qui est apte à se déplacer entre deux positions, correspondant respectivement aux configurations ouverte et fermée de cette valve 46, le déplacement de cet organe mobile étant commandé en fonction du premier paramètre de commande P.

En l'espèce, la commande 144 représentée sur la figure 1 pour la valve de commande 46 est un actionneur capable de déplacer l'organe mobile de la valve de commande 46, en fonction de la température.

La valve de commande 46 est amenée dans sa position d'ouverture par l'actionneur 144, tandis qu'elle est amenée dans sa position de fermeture par des moyens de rappel élastique de commande, en l'espèce un ressort 55, aux efforts duquel s'ajoutent ceux qui résultent de la pression de fluide provenant de la conduite de liaison 48 qui est reliée à la conduite de liaison 52A.

Nous allons à présent décrire le fonctionnement de la valve d'échange 24, qui comme on l'aura bien compris dépend d'une part, de la pression dans la conduite principale 12 ou 14 à laquelle elle est reliée et, d'autre part, du premier paramètre de commande P qui est apte à actionner la valve de commande 46.

Lorsque la valve de commande 46 est en position de fermeture, elle n'autorise pas le fluide provenant des conduites 52A et 52B, et de la chambre de commande de fermeture, à s'écouler vers le réservoir sans pression 26, de sorte que la pression dans la conduite de liaison 52A (a fortiori dans la chambre de commande de fermeture), est égale à la pression dans la conduite 22 et dans la conduite 142, ceci quel que soit le niveau de pression dans la conduite 22. Il s'ensuit que les efforts de rappel dus au ressort 145, combinés à la pression de fluide dans la conduite de liaison 52A sont alors plus importants que ceux exercés par la pression du fluide contenu dans la conduite de liaison 142, de sorte que la valve d'échange 24 se positionne dans sa configuration de fermeture interdisant ainsi l'évacuation d'un débit d'échange vers le réservoir sans pression 26, comme illustré sur la figure 1.

Au contraire, lorsque la valve de commande 46 est en position d'ouverture, elle autorise le fluide provenant de la conduite de liaison 52A et de la chambre de commande de fermeture à s'échapper vers le réservoir sans pression 26, de sorte que la pression de fluide dans la conduite de liaison 52A (a fortiori dans la chambre de commande de fermeture) est plus faible du fait de la présence de la restriction 54 que celle du fluide contenu dans la conduite de liaison 142 (a fortiori dans la chambre de commande d'ouverture). Il s'ensuit que, lorsque la pression du fluide dans la conduite de liaison 142 est supérieure à une valeur seuil qui génère un effort supérieur à l'effort du ressort 145, la valve d'échange 24 se positionne dans sa configuration d'ouverture autorisant ainsi un débit d'échange vers le réservoir sans pression 26 en réalisant une liaison entre la conduite 22 et la conduite de sortie 32. Par contre, quand la pression du fluide dans la conduite de liaison 142 est inférieure à cette valeur seuil, elle génère un effort inférieur à celui du ressort 145 et la valve d'échange se positionne dans sa configuration de fermeture interdisant un débit d'échange.

Les figures 2A et 2B représentent en détails, selon un exemple, une valve d'échange 24 et une valve de commande 46 du type précité.

La valve d'échange 24, représentée en position fermée sur la figure 2A, comporte un corps de valve 62 ayant une entrée 62A apte à être raccordée à l'une des conduites principales 12 ou 14 ou à la conduite 22 de la figure 1, et une sortie 62B apte à être reliée au réservoir sans pression 26. L'organe mobile de cette valve d'échange 24, en l'espèce un tiroir de soupape 64 est mobile dans ce corps de valve 62 entre une première position d'ouverture dans laquelle il isole l'entrée 62A de la valve d'échange 24 de la sortie 62B de cette dernière et une deuxième position (représentée sur la figure 2B) dans laquelle il relie ladite entrée 62A et ladite sortie 62B. Ces entrée et sortie 62A et 62B du corps 62 forment les entrée et sortie 24A et 24B évoquées en relation avec la figure 1.

Le ressort 145 tend à pousser ce tiroir 64 contre un épaulement 62C formé dans le corps de valve 62 dans le sens de la flèche F1 vers sa position de fermeture dans laquelle il obstrue la sortie 62B.

La chambre de commande d'ouverture 66A de la valve d'échange 24 est située à l'extrémité 64A du tiroir 64 qui est voisine de l'entrée 62A du corps de valve 62, tandis que la chambre de commande de fermeture 66B est située à l'autre extrémité 64B de ce tiroir 64.

Les deux chambres de commande 66A et 66B communiquent entre elles par un perçage du tiroir 64, en l'espèce une conduite de liaison 68. Cette conduite de liaison 68 comporte la restriction 54 permettant de limiter le débit de fluide entrant dans la chambre de commande de fermeture 66B et de créer ainsi une perte de charge entre les chambres d'ouverture 66A et de fermeture 66B. La conduite 68 forme ainsi les conduites 142, 52A et 52B évoquées en relation avec la figure 1.

La valve de commande 46 comporte un clapet de commande ayant une bille et un siège, qui permet de relier la chambre de commande de fermeture 66B de la valve d'échange 24 au réservoir sans pression ou d'isoler cette chambre 66B du réservoir. Ce clapet comporte une bille 70 qui est disposée dans le corps de valve 62 de manière à pouvoir coopérer contre un siège 72 formant une butée solidaire du corps de valve 62. En l'espèce le siège 72 est formé à l'extrémité d'un manchon 72' maintenu fixe dans le corps de valve 62 par un jonc d'arrêt 73. Une tige 74 coopérant avec cette bille 70, est apte en fonction d'un seuil du paramètre P, à solliciter la bille 70 dans le sens indiqué par la flèche F1 pour écarter la bille 70 de son siège 72, tandis que des moyens de rappel élastique de commande, en l'espèce le ressort 55, sollicitent en permanence la bille 70 dans le sens opposé, indiqué par la flèche F2, vers sa position de fermeture. Le ressort 55 est avantageusement un ressort conique dont le sommet 55A supporte la bille 70.

Ainsi la bille 70 est en appui contre le sommet 55A du ressort 55, tandis que l'autre extrémité 55B du ressort 55, formant sa base, est en appui contre un élément 76 maintenu fixe dans le corps de valve 62 par un jonc d'arrêt 76'. Cet élément 76 est pourvu d'un perçage 76A permettant au fluide provenant de la conduite de liaison 68 de circuler jusqu'à l'enceinte qui contient la bille 70. Il s'ensuit que la chambre de commande de fermeture 66B s'étend de part et d'autre de ce perçage 76A.

Sur la figure 2A, la tige 74 coopère avec un organe 84 sensible à la température, en l'espèce la tige 74 et ledit organe 84 forment l'actionneur 144, la tige 74 pouvant être déplacée dans le sens des flèches F1 ou F2 en fonction de la valeur du premier paramètre de commande P, qui est dans ce cas une température prise dans une chambre 144', pour solliciter le passage de la valve de commande 46 entre sa position fermée et sa position ouverte. Ainsi, dans ce cas, l'actionneur est un élément thermosensible 144, tel qu'un vérin thermique. Il peut également s'agir d'un vérin électrique ou électro-mécanique commandé par une unité électronique de commande. Il convient de noter que la chambre 144' est naturellement remplie par le fluide présent dans le carter du moteur. L'actionneur peut réagir à un paramètre autre que la température et en particulier autre que la température d'un fluide, par exemple la pression de fluide dans une autre partie du circuit que la conduite principale qui est à la plus basse pression, la température du carter du moteur, la cylindrée active du moteur, etc.).

L'actionneur 144 est solidaire du corps de valve 62. En l'espèce, il est maintenu contre le corps de valve 62 par l'intermédiaire du manchon 72' et d'un bouchon 78 fixé de manière étanche dans un fourreau 80 disposé dans le carter du moteur hydraulique (non représenté). On comprend qu'à une des extrémités 80A, le fourreau 80 est fermé par le bouchon 78, tandis qu'à son autre extrémité 80B, il présente un alésage 80' dans lequel le corps de valve 62 est disposé avec un jeu e autorisant le passage du fluide entre l'enceinte du carter du moteur et la chambre 144'.

Le manchon 72' présente un perçage 72A dans lequel la tige 74 est mobile et un passage 72B qui fait communiquer ce passage 72A avec la chambre 144'. Le siège 72 de la bille 70 est situé à l'extrémité du perçage 72A côté chambre de commande de fermeture 66B, de sorte que la position de la bille 70 interdit ou autorise la liaison entre le passage 72B et ladite chambre 66B. Le passage 72B est quant à lui en relation au réservoir sans pression 26 (représenté sur la figure 1) par l'intermédiaire de la chambre 144' et du jeu e existant entre le fourreau 80 et le corps de valve 62, permettant au fluide contenu dans la chambre de commande de fermeture 66B de s'échapper vers ce réservoir, lorsque la bille 70 est écartée du siège 72 par la tige 74.

Ainsi, lorsque la bille 70 est bloquée par le ressort 55 contre le siège 72, le fluide contenu dans la chambre de commande de fermeture 66B ne peut s'échapper vers ce réservoir et les efforts dus au ressort 145 combinés à la pression dans cette chambre 66B sont supérieurs à ceux dus à la pression dans la chambre de commande d'ouverture 66A, ce qui conduit à pousser le tiroir 64 vers sa position de fermeture dans le sens de la flèche F1. En conséquence, aucune liaison entre l'entrée 62A et la sortie 62B du corps de valve n'est possible, de sorte que l'échange ne peut se faire vers le réservoir sans pression.

Lorsque la température du fluide contenu dans la chambre 144' atteint un seuil donné, la tige 74 se déplace sous l'action du vérin thermosensible 144, à l'encontre du ressort 55 qui se comprime, dans le sens indiqué par la flèche F1 écartant la bille 70 de son siège 72, comme illustré sur la figure 2B. Dans ce cas, le fluide contenu dans la chambre de commande de fermeture 66B s'échappe par le perçage 72A et le passage 72B vers le réservoir, comme indiqué par les flèches F.

Il s'ensuit que, lorsque la pression à l'entrée 62A de la valve d'échange 24 est supérieure à un seuil donné, les efforts dus à la pression du fluide contenu dans la chambre de commande d'ouverture 66A deviennent supérieurs à ceux dus au ressort 145 et à la pression dans la chambre de commande de fermeture 66B, de sorte que le tiroir 64 de la soupape que constitue la valve d'échange 24 est poussé, à l'encontre de l'effort de rappel du ressort 145 qui se comprime, vers la position d'ouverture de la valve d'échange dans le sens de la flèche F2, permettant de relier l'entrée 62A du corps 62 de la valve d'échange à la sortie 62B de ce corps et ainsi autoriser l'échange vers le réservoir sans pression. Par contre, lorsque la pression du fluide à l'entrée 62A est inférieure audit seuil, l'effort de rappel du ressort 145 est prépondérant, de sorte que le tiroir 64 est poussé vers la position de fermeture de la valve d'échange dans le sens de la flèche F1 interdisant un débit d'échange.

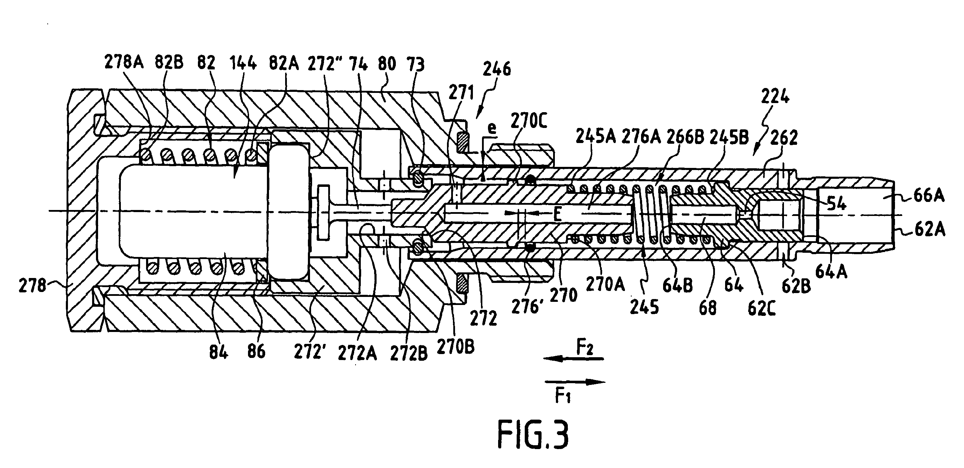

La figure 3 illustre une variante de la valve de commande de la figure 2A en position fermée. Le tiroir 64 et l'actionneur 144 sont identiques à ceux décrits précédemment et fonctionnent de la même manière, de sorte qu'ils ne font pas l'objet de la description qui va suivre. Tous les éléments communs à la figure 3 et aux figures 2A et 2B ont les mêmes références que sur ces figures.

La variante de la figure 3 se différencie de celle des figures 2A et 2B par le fait que le ressort de rappel d'échange permettant de solliciter le tiroir 64 de la valve d'échange 224 et le ressort de rappel de commande sont formés par un même ressort 245. L'ensemble bille 70, ressort conique 55 et élément fixe 76, est à présent remplacé par un unique élément mobile 270 qui est apte à se déplacer vers une position d'ouverture, dans le sens de la flèche F1, position dans laquelle il autorise le fluide contenu dans la chambre de commande de fermeture 266B à s'échapper vers le réservoir sans pression ou bien vers une position de fermeture, dans le sens de la flèche F2, position dans laquelle le fluide dans ladite chambre 266B est isolé du réservoir. La figure 3 illustre la position de fermeture de l'élément mobile 270.

Cet élément mobile 270 présente un épaulement 270A contre lequel le ressort 245 est en appui par une des ses extrémités 245A (son autre extrémité 245B étant en appui contre le tiroir 64) et une surface d'étanchéité 270B, opposée à l'épaulement 270A et apte à venir en appui contre le siège 272 formé à l'extrémité d'un manchon 272' fixé par un jonc d'arrêt 73 dans le corps de valve 262. L'action de ce ressort 245 et de la pression du fluide contenu dans la chambre de commande de fermeture 266B tend à solliciter le déplacement de l'élément mobile 270 dans le sens de la flèche F2 vers la position de fermeture de la valve de commande.

Comme sur les figures 2A et 2B, le manchon 272' présente un passage 272B permettant, lorsque l'élément mobile 270 est écarté du siège 272 par la tige 74 de l'actionneur 144, de relier la chambre de commande de fermeture 266B au perçage 272A du manchon 272', et donc, grâce au jeu e, au réservoir.

Ainsi, dès que la température atteint un seuil donné, la tige 74 pousse l'élément mobile 270 vers sa position d'ouverture, dans le sens de la flèche F1, jusqu'à ce qu'un épaulement 270C formé sur cet élément 270, vienne en butée contre un jonc 276' fixé dans le corps de valve 262. Ce déplacement de l'élément mobile 270 entraîne une compression du ressort 245.

Une conduite de prélèvement 271 reliée à une conduite de liaison 276A, toutes deux formées dans l'élément mobile 270, permet de faire communiquer la chambre de commande de fermeture 266B avec le réservoir sans pression par l'intermédiaire du perçage 272A, du passage 272B et du jeu e qui existe entre le fourreau 80 et le corps de valve 262.

Dans la position de fermeture, l'épaulement 270C est écarté du jonc 276' d'une distance E choisie pour permettre la mobilité de l'élément mobile 270 de son siège 272 d'un écart suffisant pour autoriser l'échappement du fluide contenu dans la chambre de commande de fermeture 266B.

A partir de la position de fermeture représentée sur la figure 3, le fonctionnement est le suivant. Quel que soit le niveau de la pression du fluide dans la chambre de commande d'ouverture 66A, l'équilibre des pressions de fluide dans les chambres 66A et 266B fait que les efforts exercés par le ressort 245 sur le tiroir 64 contraignent ce dernier à rester immobile. Lorsque la tige 74 pousse l'élément mobile 270 dans le sens F1, le ressort 245 se comprime légèrement, la pression dans la chambre 266B diminue, le fluide s'écoulant comme indiqué précédemment. Il en résulte que si la pression dans la chambre 66A est supérieure à un seuil donné, alors les efforts générés par cette pression sont supérieurs à ceux du ressort 245 et poussent le tiroir 64 dans le sens de la flèche F2, en comprimant davantage le ressort 245, jusqu'à faire communiquer l'entrée 62A et la sortie 62B de la valve d'échange 62. Par contre, si la pression du fluide dans la chambre 66A est inférieure audit seuil, les efforts du ressort 245 sur le tiroir 64 deviennent prépondérants et poussent le tiroir vers la position de fermeture, interdisant tout débit d'échange.

Afin d'éviter tout risque d'endommagement en position ouverte de la valve de commande 246 et pour éviter de devoir dimensionner très précisément les pièces environnantes, le corps 84 de l'actionneur 144 peut être mobile. Ainsi, il peut être prévu un ressort de compensation 82 en butée contre un capuchon 278 et contre le corps 84 de l'actionneur 144, repoussant en permanence ce dernier contre un épaulement 272" du manchon 272' et autorisant le déplacement relatif du corps 84 de l'actionneur 144 par rapport à la tige 74. Plus précisément, ce ressort de compensation 82 vient en appui à une des ses extrémités 82A contre une rondelle 86, elle-même en appui contre le corps 84 de l'actionneur 144, tandis que son autre extrémité 82B vient en appui contre un épaulement 278A formé dans le capuchon 278.

Ainsi, en position d'ouverture de la valve de commande 246 (non représenté sur la figure 3), si la tige 74 a poussé l'élément mobile 270 dans le sens de la flèche F1, jusqu'à ce que son épaulement 270C vienne en butée contre le jonc 276' et que certaines conditions (hausse de la température, dilatation des pièces, etc.) tendent à déplacer davantage la tige 74 hors du corps 84, ce dernier encaisse les efforts et se déplace à l'encontre du ressort de compensation 82 dans le sens de la flèche F2. Bien entendu, le ressort de compensation 82 se comprime moins facilement que le ressort 245.

Comme indiqué précédemment pour les figures 2A, 2B et 3, le fourreau 80 contenant l'actionneur 144, la valve de commande et la valve d'échange est fixé, par exemple par vissage, dans un perçage du carter du moteur hydraulique. De même, le sélecteur 20 peur être intégré au moteur hydraulique, sa sortie 22 étant directement reliée à l'entrée 62A de la valve d'échange. En variante, les mêmes dispositions peuvent être appliquées au carter de la pompe principale d'alimentation du moteur hydraulique.

## Revendications

1. Dispositif de valve comprenant une valve d'échange ayant un corps de valve (62 ; 262) ayant une entrée (62A) et une sortie (62B), un organe mobile (64) disposé dans le corps de valve et apte à occuper une première position dans laquelle il isole l'entrée (62A) et la sortie (62B) et une deuxième position dans laquelle il relie l'entrée (62A) et la sortie (62B), et une chambre de commande d'ouverture (66A) qui est située à une extrémité (64A) de l'organe mobile (64) et voisine de l'entrée (62A) du corps de valve (62 ; 262) ;
la valve d'échange comportant une chambre de commande de fermeture (66B; 266B), qui est située à l'autre extrémité (64B) de l'organe mobile (64) et qui est reliée à la chambre de commande d'ouverture (66A) par une restriction (54) ; et
le dispositif comprenant une valve de commande (46 ; 246) qui est apte à être commandée en fonction d'au moins un paramètre de commande autre que la pression à l'entrée du corps de valve pour relier la chambre de commande de fermeture (66B ; 266B) à un passage d'échappement (72B, e) ou pour isoler ladite chambre de commande de fermeture de ce passage ;
**caractérisé en ce que** le dispositif comporte en outre un fourreau (80) qui est fermé à une extrémité et qui présente un alésage (80') dans lequel le corps de valve (62 ; 262) est disposé avec un jeu (e) permettant le passage de fluide.

2. Dispositif selon la revendication 1, **caractérisé en ce que** les chambres de commande d'ouverture (66A) et de fermeture (66B ; 266B) communiquent par un perçage (68) de l'organe mobile (64) dans lequel est disposée la restriction (54).

3. Dispositif selon la revendication 1 ou 2, **caractérisé en ce que** la valve de commande (46 ; 246) comporte un clapet de commande (70 ; 270) disposé au moins en partie dans le corps de valve (62 ; 262).

4. Dispositif selon la revendication 3, **caractérisé en ce qu'**il comporte des moyens de rappel élastique de commande (55 ; 245) qui sollicitent en permanence ledit clapet de commande (70 ; 270) vers sa position de fermeture.

5. Dispositif selon la revendication 4, **caractérisé en ce que** le clapet de commande comprend une bille (70) en appui contre le sommet (55A) d'un ressort (55) dont la base (55B) est en appui contre un élément (76), qui est fixe par rapport au corps de valve (62) et qui permet la circulation de fluide.

6. Dispositif selon la revendication 4, **caractérisé en ce que** le clapet comprend un élément mobile (270) ayant un épaulement (270A) formant un appui pour une extrémité (245A) d'un ressort (245) dont l'autre extrémité (245B) est en appui contre l'organe mobile (64) de la valve d'échange.

7. Dispositif selon la revendication 6, **caractérisé en ce que** le corps de valve (262) comprend une butée (276') pour l'élément mobile (270).

8. Dispositif selon l'une quelconque des revendications 1 à 7, **caractérisé en ce qu'**il comporte un actionneur (144) apte à commander la valve de commande (46 ; 246) en fonction d'un seuil dudit au moins un paramètre de commande.

9. Dispositif selon la revendication 8, **caractérisé en ce qu'**il comporte un organe (84) sensible à la température qui coopère avec l'actionneur (144).

10. Dispositif selon la revendication 8 ou 9, **caractérisé en ce que** l'actionneur (144) et/ou l'organe (84) sensible à la température sont disposés dans ledit fourreau (80).

11. Dispositif selon les revendications 3 et 8 et l'une quelconque des revendications 1 à 10, **caractérisé en ce que** le clapet de commande (70 ; 270) comporte un siège (72 ; 272) formé à l'extrémité d'un manchon (72' ; 272') qui est fixé au corps de valve (62 ; 262) et **en ce que** l'actionneur (144) comporte une tige (74) qui est mobile dans le manchon (72' ; 272').

12. Dispositif selon les revendications 10 et 11, **caractérisé en ce que** le passage d'échappement comprend un passage (72B) qui fait communiquer l'intérieur du manchon (72' ; 272') avec une chambre (144') située dans le fourreau (80) et ledit jeu (e) entre le fourreau et le corps de valve (62 ; 262).

13. Dispositif selon l'une quelconque des revendications 1 à 12, **caractérisé en ce que** la valve d'échange est une valve progressive.

## Claims

1. A valve device comprising a replenishing valve having a valve body (62; 262) that has an inlet (62A) and an outlet (62B), a moving member (64) disposed in the valve body and suitable for taking up a first position in which it isolates the inlet (62A) from the outlet (62B), and a second position in which it connects the inlet (62A) to the outlet (62B), and an opening control chamber (66A) that is situated at one end (64A) of the moving member (64) and in the vicinity of the inlet (62A) of the valve body (62; 262);
the replenishing valve including a closing control chamber (66B; 266B) that is situated at the other end (64B) of the moving member (64) and that is connected to the opening control chamber (68A) via a constriction (54); and
the device also comprising a control valve (46; 246) that is suitable for being controlled as a function of at least one control parameter other than the pressure at the inlet of the valve body so as to connect the closing control chamber (66B; 266B) to a discharge passageway (72B, e) or so as to isolate said closing control chamber from said passageway;
said valve device being **characterized in that** it further comprises a sheath (80) that is closed at one end and that is provided with a bore (80') in which the valve body (62; 262) is disposed with clearance (e) enabling fluid to pass through.

2. A device according to claim 1, **characterized in that** the opening control chamber (66A) and the closing control chamber (66B; 266B) communicate with each other via a bore (68) in the moving member (64), in which bore the constriction (54) is disposed.

3. A device according to claim 1 or claim 2, **characterized in that** the control valve (46; 246) has a control valve member (70; 270) that is disposed at least in part inside the valve body (62; 262),

4. A device according to claim 3, **characterized in that** it further comprises control resilient return means (55; 245) that continuously urge said control valve member (70; 270) towards its closed position,

5. A device according to claim 4, **characterized in that** the control valve member comprises a ball (70) in abutment against the top (55A) of a spring (55) whose base (55B) is in abutment against an element (76) that is stationary relative to the valve body (62) and that enables fluid to flow.

6. A device according to claim 4, **characterized in that** the valve member comprises a moving element (270) having a shoulder (270A) forming an abutment for one end (245A) of a spring (245) having its other end (245B) in abutment against the moving member (64) of the replenishing valve.

7. A device according to claim 6, **characterized in that** the valve body (262) is provided with an abutment (276') for the moving element (270).

8. A device according to any one of claims 1 to 7, **characterized in that** it is provided with an actuator (144) suitable for controlling the control valve (46; 246) as a function of a threshold of said at least one control parameter.

9. A device according to claim 8, **characterized in that** it is provided with a temperature-responsive member (84) that co-operates with the actuator (144).

10. A device according to claim 8 or claim 9, **characterized in that** the actuator (144) and/or the temperature-responsive member are disposed in said sheath (80).

11. A device according to claims 3 and 8. and to any one of claims 1 to 10, **characterized in that** the control valve member (70; 270) is provided with a seat (72; 272) formed at the end of a sleeve (72': 272') that is fastened to the valve body (62; 262), and **in that** the actuator (144) is provided with a rod (74) that is mounted to move in the sleeve (72'; 272').

12. A device according to claims 10 and 11, **characterized in that** the discharge passageway comprises firstly a passageway (72B) that puts the inside of the sleeve (72'; 272') into communication with a chamber (144') situated in the sheath (80), and with said clearance (e) between the sheath and the valve body (62; 262).

13. A device according to any one of claims 1 to 12, **characterized in that** the replenishing valve is a progressive valve.

## Patentansprüche

1. Ventilvorrichtung mit einem Austauschventil mit einem Ventilkörper (62; 262), der einen Eingang (62A) und einen Ausgang (62B) aufweist, einem beweglichen Element (64), das in dem Ventilkörper angeordnet ist: und eine erste Position, in der es den Eingang (62A) und den Ausgang (62B) absperrt, und eine zweite Position, in der es den Eingang (62A) und den Ausgang (62B) miteinander verbindet, einzunehmen vermag, und einem Öffnungssteuerraum (66A), der an einem Ende (64A) des beweglichen Elements (64) angeordnet ist und dem Eingang (62A) des Ventilkörpers (62; 262) benachbart ist;
wobei das Austauschventil einen Schließsteuerraum (66B, 266B) aufweist, der am anderen Ende (64B) des beweglichen Elements (64) angeordnet ist und mit dem Öffnungssteuerraum (66A) durch eine Drosselung (54) verbunden ist; und
wobei die Vorrichtung ein Steuerventil (46; 246) umfasst, das in Abhängigkeit von wenigstens einem Steuerparameter, der nicht dem Druck am Eingang des Ventilkörpers entspricht, betätigt wird, um den Schließsteuerraum (66B; 266B) mit einem Ableitungskanal (72B, e) zu verbinden oder den Schließsteuerraum von diesem Kanal abzusperren;
**dadurch gekennzeichnet dass** die Vorrichtung ferner eine Hülse (80) umfasst, die an einem Ende geschlossen ist und die eine Bohrung (80') aufweist, in weicher der Ventilkörper (62; 262) mit: einem Spiel (e) angeordnet ist, das den Fluiddurchlass ermöglicht.

2. Vorrichtung nach Anspruch 1;
**dadurch gekennzeichnet, dass** der Öffnungs- (66A) und der Schließsteuerraum (66B; 266B) durch eine Bohrung (68) des beweglichen Elements (64), in der die Drosselung (54) angeordnet ist, miteinander in Verbindung stechen.

3. Vorrichtung nach Anspruch 1 oder 2,
**dadurch gekennzeichnet, dass** das Steuerventil (46; 246) eine Steuerklappe (70; 270) aufweist, die wenigstens zum Teil in dem Ventilkörper (62; 262) angeordnet ist,

4. Vorrichtung nach Anspruch 3,
**dadurch gekennzeichnet, dass** sie elastische Betätigungsrückstellmittel (55, 245) umfasst, die die Steuerklappe (70; 270) ständig in ihre Schließstellung drängen,

5. Vorrichtung nach Anspruch 4,
**dadurch gekennzeichnet, dass** die Steuerklappe eine Kugel (70) umfasst, die an der Spitze (55A) einer Feder (55) anliegt, deren Basis an einem Teil (76) anliegt, das bezüglich des Vertilkörpers (62) feststehend ist und das Zirkulieren des Fluids erlaubt.

6. Vorrichtung nach Anspruch 4,
**dadurch gekennzeichnet, dass** die Klappe ein bewegliches Teil (270) umfasst, mit einem Absatz (270A), der für ein Ende (245A) einer Feder (245) eine Anlage bildet, deren anderes Ende (245B) an dem beweglichen Element (64) des Austauschventils anliegt.

7. Vorrichtung nach Anspruch 6,
**dadurch gekennzeichnet, dass** der Ventilkörper (262) einen Anschlag (276') für das bewegliche Teil (270) aufweist.

8. Vorrichtung nach einem der Ansprüche 1 bis 7,
**dadurch gekennzeichnet, dass** sie einen Steller (144) aufweist, der in der Lage ist, das Steuerventil (46; 246) in Abhangigkeit von einem Grenzwert des wenigstens einen Steuerparameters zu betätigen,

9. Vorrichtung nach Anspruch 8,
**dadurch gekennzeichnet, dass** sie ein temperaturempfindliches Organ (84) aufweist, das mit dem Steller (144) zusammenwirkt.

10. Vorrichtung nach Anspruch 8 oder 9,
**dadurch gekennzeichnet, dass** der Steller (144) und/oder das temperaturempfindliche Organ (84) in der Hülse (80) angeordnet sind,

11. Vorrichtung nach den Ansprüchen 3 und 8 und einem der Ansprüche 1 bis 10,
**dadurch gekennzeichnet, dass** die Steuerklappe (70; 270) einen Sitz (72; 272) aufweist, der am Ende einer Buchse (72'; 272') gebildet ist, die an dem Ventilkörper (62; 262) befestigt ist, und dass der Steller (144) eine Stange (74) umfasst, die in der Büchse (72'; 272') beweglich ist.

12. Vorrichtung nach den Ansprüchen 10 und 11,
**dadurch gekennzeichnet dass** der Ableitungskanal einen Durchlass (72B) aufweist, der den Innenraum der Buchse (72'; 272') mit einer in der Hülse (80) angeordneten Kammer (144') und dem Spiel (e) zwischen der Hülse und dem Ventilkörper (62; 262) kommunizieren lässt.

13. Vorrichtung nach den Ansprüchen 1 bis 12,
**dadurch gekennzeichnet, dass** das Austauschventil ein Proportionalventil ist,
